# EUROPEAN PATENT APPLICATION

(11) **EP 3 480 638 A2**
(43) Date of publication of application: **08.05.2019**
(21) Application number: 18213889.1
(22) Date of filing: 29.03.2013
(51) Int. Cl.: G02B 6/46, G02B 6/36, G02B 6/44, G02B 6/48

(54) **DEPLOYING OPTICAL FIBERS USING INDEXING TERMINALS**

(30) Priority: 30.03.2012 US 201261618156 P
(62) Divisional of application: 13767640.9
(71) Applicant: ADC Telecommunications, Inc., Berwyn, PA 19312 (US)
(72) Inventor: Kmit, Paul, Hickory, NC 28602 (US); Parsons, Thomas, Leominster, MN Minnesota MA 01453 (US); Gronvall, Erik, Bloomington, MN Minnesota MN 55437 (US); Ellens, Douglas C., Starbuck, MN Minnesota MN 56381 (US); Toundas, Panayiotis, Vancouver, BC V5Y 1X4 (CA); Badar, Timothy G., St. Paul, MN Minnesota MN 55116 (US); Trevor D., Smith, Eden Prairie, MN Minnesota 55347 (US)
(74) Representative: Patentanwälte Bressel und Partner mbB

(57) **Abstract**

The invention relates to an indexing terminal (110) comprising:
a housing (111) defining an interior;
a plurality of optical fiber disposed at least partially within the interior of the housing (111), the optical fibers extending from first ends to second ends;
an input port (156) terminating the first ends of the optical fibers, the input port (156) indexing the first ends of the optical fibers (154) into positions PI through Pn, wherein the input port (156) is spaced from the housing (111);
a first single-fiber port (112) accessible from an exterior of the housing (111), the first single-fiber port (112) receiving the second end of a first (152) of the optical fibers; and
a first multi-fiber port (114) accessible from an exterior of the housing (111), the first multi-fiber port (114) receiving the second ends of some optical fibers (154), the first multi-fiber port (114) indexing the second ends of the some optical fibers (154) into positions P1' through Pn' that have a one-to-one correspondence with positions P1 through Pn ;
wherein the first end of the first optical fiber (152) is indexed at position Px, wherein Px is one of the positions PI through Pn, wherein the first multi-fiber port (112) has a corresponding position Px' that is one of the positions P1' through Pn', and wherein the second end of one of the some optical fibers (154) is routed to Px'.

## Description

This application is being filed on 29 March 2013, as a PCT International Patent application and claims priority to U.S. Patent Application Serial No. 61/618,156 filed on 30 March 2012, the disclosure of which is incorporated herein by reference in its entirety.

### Technical Field

The present disclosure relates generally to equipment for fiber optic communications networks. More particularly, the present disclosure relates to the components of passive optical networks and methods for deploying the same.

### Background

Passive optical networks are becoming prevalent in part because service providers want to deliver high bandwidth communication capabilities to customers. Passive optical networks are a desirable choice for delivering high-speed communication data because they may not employ active electronic devices, such as amplifiers and repeaters, between a central office and a subscriber termination. The absence of active electronic devices may decrease network complexity and/or cost and may increase network reliability.

### Summary

Aspects of the disclosure relate to an indexing terminal including a housing defining an interior; a plurality of optical fiber disposed at least partially within the interior of the housing and extending from first ends to second ends; an input port terminating the first ends of the optical fibers and indexing the first ends of the optical fibers into positions P1 through Pn; a first single-fiber port accessible from an exterior of the housing; and a first multi-fiber port accessible from an exterior of the housing. The first single-fiber port receives the second end of a first of the optical fibers. The first multi-fiber port receives the second ends of some optical fibers. The first multi-fiber port indexes the second ends of the some optical fibers into positions P1' through Pn' that have a one-to-one correspondence with positions P1 through Pn. The first end of the first optical fiber is indexed at position Px, wherein Px is one of the positions P1 through Pn. The first multi-fiber port has a corresponding position Px' that is one of the positions P1' through Pn'. The second end of one of the some optical fibers is routed to Px'.

In some implementations, the input port is disposed on the housing. In other implementations, the optical fibers form a stub cable routed out of the interior of the housing and the input port terminates the stub cable.

Other aspects of the disclosure relate to a mounting and payout arrangement including a mounting bracket configured to hold an indexing terminal and at least one multi-service terminal; a slack storage spool coupled to the mounting bracket; and a payout spool removably coupled to the slack storage spool. The mounting bracket is configured to be secured to a mounting structure.

Other aspects of the disclosure relate to a distributed optical network including a plurality of distribution cables and a plurality of indexing terminals. Each distribution cable includes a number of optical fibers extending between first ends and second ends. The first ends of the optical fibers are terminated at an optical connector that indexes the optical fibers. Each indexing terminal has at least a first output port and a second output port. The first output port is optically coupled to the second end of a first of the optical fibers of a respective one of the distribution cables. The first end of the first optical fiber is indexed at a first position at the respective optical connector. The second output port indexes the second ends of a plurality of the optical fibers of the respective distribution cable. A position at the second output port that corresponds to the first position at the optical connector receives one of the plurality of optical fibers.

Other aspects of the disclosure relate to a method of deploying indexing terminals and distribution cables in a distributed optical network. Each indexing terminal has at least one single-fiber output port and at least one multi-fiber output port. Each distribution cable has at least a first optical fiber and a second optical fiber. The method includes optically coupling a feeder cable to a connectorized end of a first distribution cable of a first indexing terminal at a distribution hub; moving the first indexing terminal from the distribution hub to a first mounting structure; mounting the first indexing terminal to the first mounting structure; plugging a connectorized end of a second distribution cable of a second indexing terminal into the multi-fiber output port of the first indexing terminal; moving the second indexing terminal from the first mounting structure to a second mounting structure; and mounting the second indexing terminal to the second mounting structure. Optical signals carried by the first optical fiber of the first distribution cable are available at the single-fiber output port of the first indexing terminal and wherein optical signals carried by the second optical fiber of the first distribution cable are available at the single-fiber output port of the second indexing terminal.

Other aspects of the disclosure relate to a method of deploying indexing terminals in a distributed optical network. The method includes deploying a plurality of indexing terminals at spaced locations along an optical network, each indexing terminal having a stub distribution cable; and daisy-chaining the indexing terminals together using a plurality of stub distribution cables by plugging a connectorized end of each stub distribution cable into a multi-fiber port of another one of the indexing terminals. Each of the stub distribution cables has the same number of optical fibers, and an optical fiber at a common indexed position of each stub distribution cable is optically coupled to the single-fiber port of the respective indexing terminal.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### Brief Description of the Drawings

FIG. 1 is a schematic diagram of an example distributed optical network including indexing terminals daisy-chained together;
FIG. 2 is a schematic diagram of an example indexing terminal suitable for use in the distributed optical network of FIG. 1;
FIG. 3 is a schematic diagram of the example distributed optical network of FIG. 1 in which a number of multi-service terminals have been deployed to connect subscribers to the network;
FIG. 4 is a front elevational view of an indexing terminal mounted to an example mounting and payout arrangement including a universal mounting bracket and a payout spool in accordance with the principles of the present disclosure;
FIG. 5 is a top plan view of the example mounting and payout arrangement of FIG. 4 showing the stub distribution cable of the indexing terminal wrapped around a slack storage spool and the payout spool;
FIG. 6 is a side elevational view of a mounting bracket mounted to a pole after the stub distribution cable is paid out and the payout spool is removed in accordance with the principles of the present disclosure;
FIG. 7 is a top plan view of the mounting bracket and pole of FIG. 6;
FIG. 8 is a schematic diagram of another example indexing terminal having multiple single-fiber ports and multiple multi-fiber ports;
FIG. 9 is a schematic diagram of an example distributed optical network in which any of the indexing terminals disclosed herein may be deployed; and
FIG. 10 is a top plan view of another example universal bracket lashed to a strand and holding an example multi-service terminal mounted to an example indexing terminal.

### Detailed Description

Reference will now be made in detail to the exemplary aspects of the present disclosure that are illustrated in the accompanying drawings. Wherever possible, the same reference numbers will be used throughout the drawings to refer to the same or like structure.

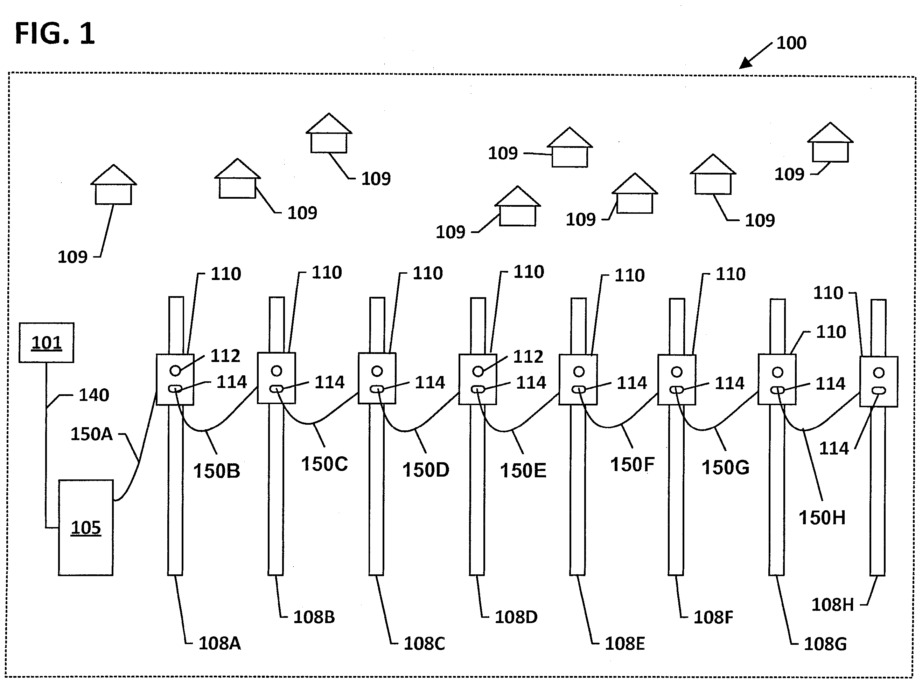

FIG. 1 illustrates an example optical network 100 being deployed in accordance with the principles of the present disclosure. The example optical network 100 includes a central office 101 and at least one fiber distribution hub 105. While only a single hub 105 is shown in FIG. 1, it will be understood that optical networks 100 typically include multiple hubs. At least one feeder cable 140 extends from the central office 101 to each distribution hub 105. At the distribution hub 105, optical fiber carried by the feeder cable 140 are split onto optical fibers of one or more distribution cables 150. At least one distribution cable 150 extends from the distribution hub 105 towards subscriber premises 109.

In accordance with some aspects, the optical network 100 is a distributed optical network in which optical signals may be split at a splitting location disposed between the distribution hub 105 and the individual subscriber premises 109 as will be disclosed in more detail herein. In such systems, individual optical fibers may be broken out from the distribution cable 150 at geographic intervals and routed to the splitting locations. In various implementations, the splitting locations may be positioned at telephone poles, strands, and/or hand holes. From the splitting locations, the split optical signals are carried by drop cables to the individual subscriber premises 109.

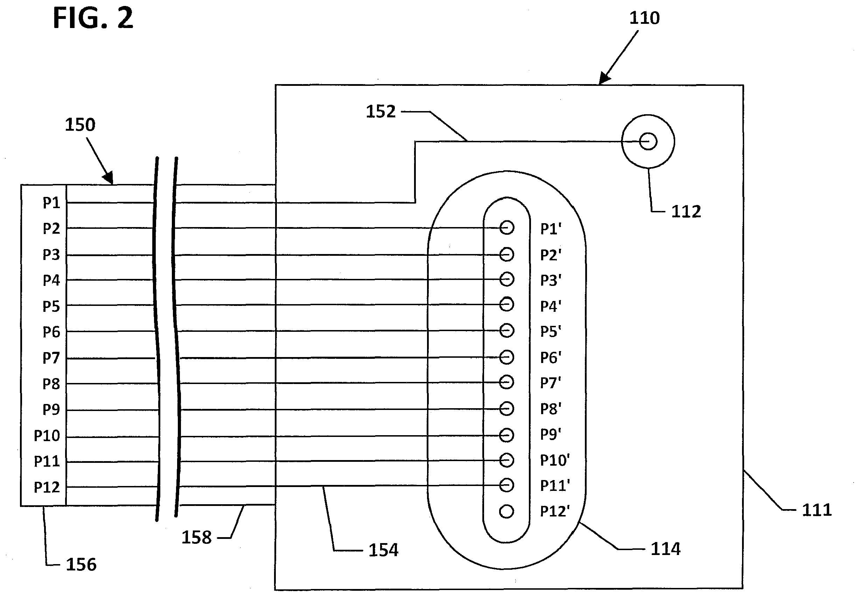

In some implementations, the individual optical fibers are broken out from the distribution cable 150 at indexing terminals 110. Each indexing terminal 110 receives a distribution cable 150 having two or more optical fibers. In some implementations, the distribution cable 150 is a stub cable that extends outwardly from the indexing terminal 110. In other implementations, the indexing terminal 110 receives a connectorized end of the distribution cable 150. In certain implementations, each indexing terminal 110 separates one of the optical fibers from the other optical fibers 152 of the distribution cable 150. The separated optical fiber 152 is routed to a first port 112 of the indexing terminal 110 and the other optical fibers 154 are routed to a second port 114 of the indexing terminal 110 (e.g., see FIG. 2).

In the example shown in FIG. 1, a first distribution cable 150A is routed from the distribution hub 105 to a mounting structure (e.g., telephone pole) 108A at which an indexing terminal 110 is mounted. The indexing terminal 110 has a first port 112 and a second port 114. A second distribution cable 150B extends from the indexing terminal 110 at the first mounting structure 108A to another indexing terminal mounted at a second mounting structure 108B. In the distributed network 100 shown in FIG. 1, indexing terminals 110 are mounted to eight poles 108A-108H. These indexing terminals 110 are daisy-chained together using distribution cables 150A-150H as will be described in more detail herein. In other implementations, however, distributed networks may include a greater or lesser number of indexing terminals 110.

FIG. 2 illustrates an example indexing terminal 110 suitable for use in the distributed optical network 100 of FIG. 1. The indexing terminal 110 includes a housing 111 that defines the first port 112 and the second port 114. In the example shown, a stub distribution cable 150 extends outwardly from the indexing terminal housing 111. The stub distribution cable 150 includes multiple optical fibers that are connectorized at an end opposite the indexing terminal housing 111. In the example shown, the stub distribution cable 150 includes twelve optical fibers. In other implementations, however, the stub distribution cable 150 may include a greater or lesser number of optical fibers (e.g., four, eight, ten, sixteen, twenty-four, seventy-two, etc.).

In certain implementations, the optical fibers of the stub distribution cable 150 extend from first ends to a second ends. The first ends of the fibers are connectorized at a multi-fiber connector 156 (e.g., an MPO-type connector). In the example shown, the first ends of the fibers are connectorized at a ruggedized multi-fiber connector (e.g., an HMFOC-connector). As the terms are used herein, ruggedized optical connectors and ruggedized optical adapters are configured to mate together to form an environmental seal. Some non-limiting example ruggedized optical connector interfaces suitable for use with an indexing terminal 110 are disclosed in U.S. Patent Nos. 7744288, 7762726, 7744286, 7942590, and 7959361, the disclosures of which are hereby incorporated herein by reference.

The connector 156 indexes the first end of each optical fiber at a particular position relative to the other fibers. In the example shown, the connector 156 indexes each of the twelve optical fibers into one of twelve positions P1-P12. The second port 114 has the same number of fiber positions as the connector 156. In the example shown, the second port 114 has twelve fiber positions P1'-P12' that correspond with the fiber positions P1-P12 of the connector 156. However, at least one of the fiber positions at the second port 114 does not receive an optical fiber as will be disclosed in more detail herein.

A first one 152 of the optical fibers has a first end located at the first position P1 of the connector 156. The second end of the first optical fiber 152 is separated out from the rest of the optical fibers 152 within the indexing terminal housing 111 and routed to the first port 112 at which optical signals carried by the first optical fiber 152 may be accessed. In some implementations, the first port 112 defines a female port at which an optical fiber plug may be mated to the first optical fiber 152 as will be described in more detail herein. In certain implementations, the first port 112 includes a ruggedized (i.e., hardened) optical adapter configured to receive a ruggedized optical connector (e.g., an HMFOC).

The remaining optical fibers 154 are routed to the second port 114. At least one of the fiber positions P1'-P12' does not receive an optical fiber 154 since at least one optical fiber 152 is diverted to the first port 112. However, the second port 114 indexes the received optical fibers 154 so that a first position P1' at the second port 114 that corresponds with the first position P1 of the connector does receive one of the optical fibers 154. In accordance with aspects of the disclosure, when the indexing terminals 110 are daisy-chained together as shown in FIG. 1, the optical fiber 152 diverted to the first port 112 will be pulled from the same position P1-P12. Also, the remaining fibers 154 will be cabled so that the corresponding position P1'-P12' at the second port 114 will receive one of the optical fibers 154 if any are available.

In the example shown, the separated optical fiber 152 located at an end of the row/strip of fibers. Accordingly, the optical fibers 154 are cabled within the terminal housing 111 to divert the second end of each optical fiber 154 over one indexed position P1'-P12' compared to the first end. For example, a fiber 154 having a first end at position Pn of the connector 156 would have a second end at position P(n-1)' at the second port 114. In the example shown, the optical fiber 154 having a first end at the second position P2 of the connector 156 will have a second end disposed at the first position P1' of the second port 114. Likewise, the optical fiber 154 having a first end at disposed the third position P3 of the connector 156 will have a second end disposed at the second position P2' of the second port 114. The optical fiber 154 having a first end at the twelfth position P12 of the connector 156 will have a second end disposed at the eleventh position P11' of the second port 114. The twelfth position P12' of the second port 114 will not receive an optical fiber. In other implementations, the optical fiber at any of the positions P1-P12 may be separated out from the rest as long as each indexing terminal separates out a fiber from the same position.

Such a cabling configuration enables the indexing terminals to be daisy-chained together using identical components while always delivering the next fiber in line to the first port 112. For example, in FIG. 1, the stub distribution cable 150B of the second indexing terminal 110 mounted to the second pole 108B may be routed to and plugged into the second port 114 of the first indexing terminal 110 mounted to the first pole 108A. The stub distribution cable 150A of the first indexing terminal 110 may be routed to the distribution hub 105 to receive split optical signals from the feeder cable 140. Accordingly, the split optical signals carried by the first optical fiber 152 of the first stub distribution cable 150A are routed to the first port 112 of the first indexing terminal 110. The split optical signals carried by the remaining optical fibers 154 of the first stub distribution cable 150A are routed to positions P1'-P11' of the second port 114 of the first indexing terminal 110.

At the second port 114, the second optical fiber 154 of the first stub cable 150A is mated with the first optical fiber 152 of the second stub cable 150B. The first optical fiber 152 of the second stub cable 150B is routed to the first port 112 of the second indexing terminal. Accordingly, the split optical signals carried by the second optical fiber 154 of the first stub cable 150A propagate to the first optical fiber 152 of the second stub cable 150B and are accessible at the second port 114 of the second indexing terminal 110. Likewise, the split optical signals carried by the sixth optical fiber 154 of the first stub cable 150A propagate to the fifth optical fiber 154 of the second stub cable 150B, the fourth optical fiber 154 of the third stub cable 150C, the third optical fiber 154 of the fourth stub cable 150D, the second optical fiber 154 of the fifth stub cable 150E, and the first optical fiber 152 of the sixth stub cable 150F and are accessible at the second port 114 of the sixth indexing terminal 110.

In alternative implementations, the distribution cable 150 is not a stub cable and the indexing terminal housing 111 defines an input port (e.g., an HMFOC port) configured to receive a second connectorized end of the distribution cable 150. In such implementations, internal cabling between the input port and the second port 114 is implemented as described above. Accordingly, the optical fiber coupled to a first position at the input port is routed to the first port 112 and the optical fiber coupled to a second position at the input port is routed to a first position at the second port 114. In such implementations, each distribution cables 150 would include twelve optical fibers that are connectorized at both ends. The first end of each distribution cable 150 would mate with the input port of one indexing terminal. The second end of each distribution cable 150 would mate with the second port 114 of another indexing terminal.

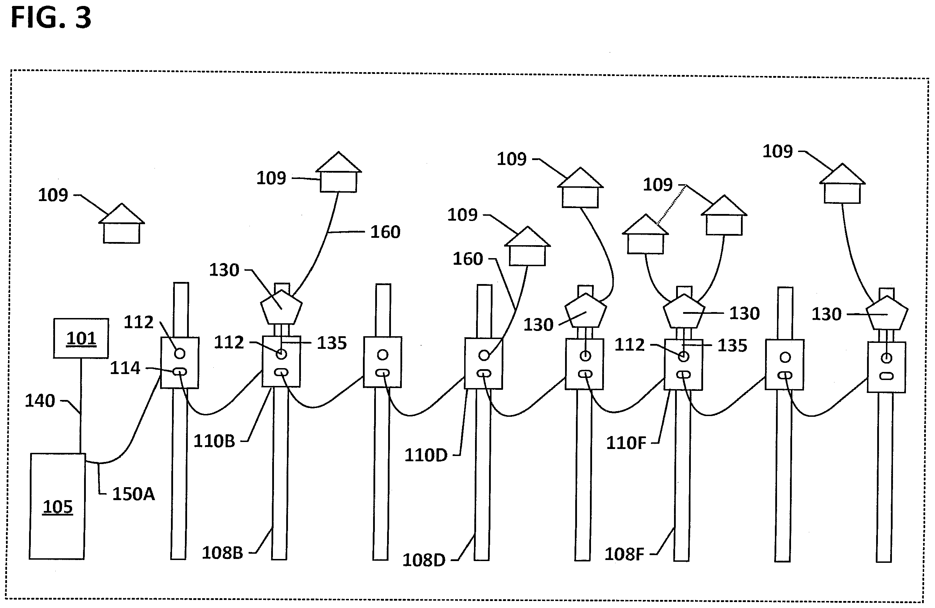

As shown in FIG. 3, subscribers 109 may be coupled to the optical network 100 via the first ports 112 of the indexing terminals 110. For example, in some implementations, multi-service terminals 130 may be mounted at or near the indexing terminals 110. The multi-service terminal 130 include one or more optical power splitters and/or wave division multiplexers. Splitter pigtails are routed to distribution ports 138 on the multi-service terminal 130. Drop cables 160 may be routed between the distribution ports and the subscriber premises 109. Additional details regarding examples of suitable multi-service terminals can be found in U.S. Patent No. 7,444,056 and in U.S. Publication No. 2009/0208177, the disclosures of which are hereby incorporated herein by reference.

A cable 135 optically couples one of the multi-service terminals 130 to one of the indexing terminals 110. In some implementations, the cable 135 is a stub cable that extends from the multi-service terminal. For example, a connectorized end of the stub cable 135 may be plugged into the first port 112 of the indexing terminal 110 so that optical signals provided at the first port 112 are routed to the optical splitters and/or wave division multiplexers. In other implementations, the cable 135 is connectorized at both ends and plugs into the first port 112 of the indexing terminal 110 and an input port of the multi-service terminal 130. In still other implementations, the cable 135 is a stub cable extending from the indexing terminal that defines the single-fiber port 112 at a distal end that plugs into an input port of the multi-service terminal 130.

In the example shown in FIG. 3, the distributed optical network includes indexing terminals 110 mounted to eight poles 108A-108H and daisy-chained together via the distribution cables 150A-150H as described above. A first subscriber 109 is coupled to the optical network 100 via a multi-service terminal 130 mounted at the second pole 108B. In particular, a drop cable 160 extends between the subscriber 109 and the multi-service terminal 130. A subscriber cable 135 extends between the multi-service terminal 130 and the first port 112 of the indexing terminal 110. Accordingly, the subscriber 109 receives optical signals that are carried from the distribution hub 105, over the second optical fiber 154 of the first distribution cable 150A, over the first optical fiber 152 of the second distribution cable 150B, to the second port 114 of the second indexing terminal 110B.

As shown at the sixth pole 108F of FIG. 3, optical signals from the single optical fiber 152 received at the first port 112 of the indexing terminal 110 may be carried to the multi-service terminal 130 via cable 135. At the multi-service terminal 130, the optical signals may be split onto two or more (e.g., four, eight, ten, twelve, sixteen, twenty-four, etc.) drop cables 160. Also as shown in FIG. 3, in certain implementations, a drop cable 160 may be routed to the subscriber premises 109 directly from the first port 112 of one of the indexing terminals 110 (e.g., see the fourth indexing terminal 110D). Routing the drop cable 160 directly from the indexing terminal 110 would provide a stronger (i.e., unsplit) optical signal to the subscriber 109.

In still other implementations, one or more optical splitters or wave division multiplexers may be mounted within the indexing terminal 110. In some such implementations, the indexing terminal may include multiple single-fiber ports to which drop cables 160 may be coupled. In other such implementations, the split signals are routed to optical fibers terminated at a multi-fiber connector that is plugged into the first port 112, which may be optically coupled to an input of a multi-service terminal 130 that may or may not include splitters.

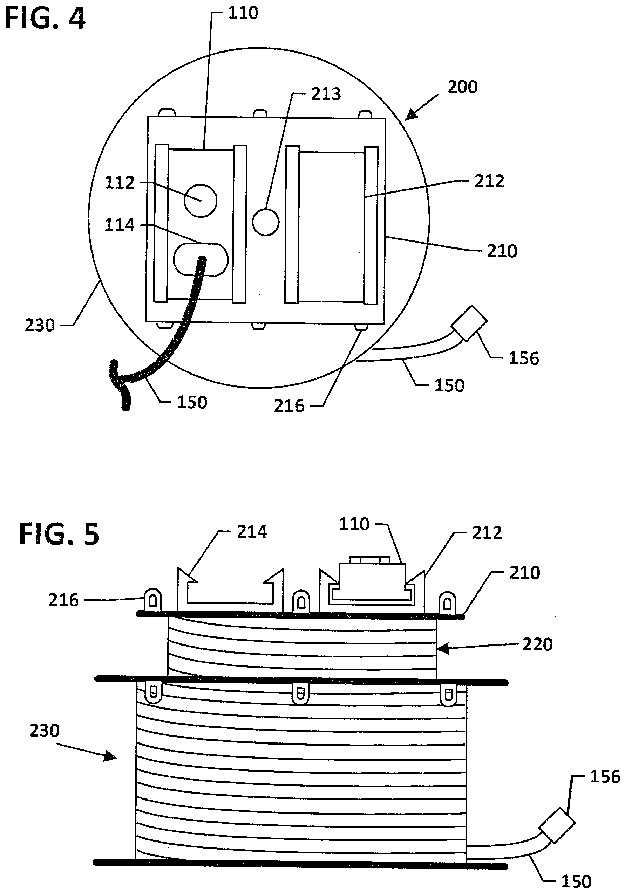

FIGS. 4-5 illustrate one example implementation of a mounting and payout arrangement 200 by which the indexing terminals 110 may be deployed. The mounting and payout arrangement 200 includes a mounting bracket 210 that is configured to secure at least the indexing terminal 110 to a telephone pole 108 or other mounting structure. The mounting bracket 210 includes at least one fastening arrangement 212 at which the indexing terminal 110 may be secured. In the example shown, the fastening arrangement 212 includes a sleeve having latching sides. In some implementations, the indexing terminal 110 may be snap-fit into the sleeve of the fastening arrangement 212. In other implementations, the indexing terminal 110 may be slid into the sleeve of the fastening arrangement 212 from a top or bottom of the sleeve. In other implementations, the fastening arrangement 212 may otherwise secure the indexing terminal 110 to the bracket 210.

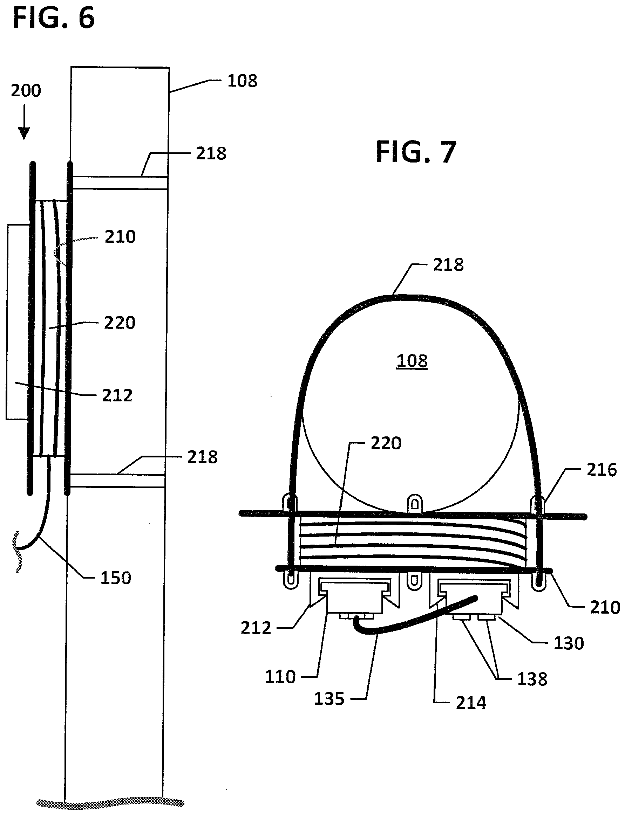

In some implementations, the mounting bracket 210 also includes a second fastening arrangement 214 at which a multi-service terminal 130 may be secured (e.g., see FIG. 7). In the example shown, the second fastening arrangement 214 is the same as the fastening arrangement 212. In other implementations, however, the second fastening arrangement 214 may have a different structure than the fastening arrangement 212. In still other implementations, the indexing terminal 110 and the multi-service terminal 130 may be secured to the mounting bracket 210 using a common fastening arrangement. In still other implementations, the multi-service terminal 130 is configured to be mounted to a separate mounting bracket.

The mounting and payout arrangement 200 also includes a payout spool 230 from which the distribution cable 150 of the indexing terminal 110 may be paid out. In some implementations, the payout spool 230 is removable from the mounting bracket 210 when the distribution cable 150 has been unwound from the payout spool 230 (see FIGS. 6 and 7). Removing the payout spool 230 after deployment reduced the footprint of the arrangement that is mounted to the pole 108 or other mounting structure.

The stub distribution cable 150 of the indexing terminal 110 is initially wound around the payout spool 230. The payout spool 230 facilitates management and storage of the distribution cable 150 prior to deployment. In some implementations, the payout spool 230 is configured to rotate about a drum (e.g., mounted to a vehicle) to facilitate deployment of the cable 150. For example, the drum or spool may be inserted through passage 213 that extends through the payout spool 230 along an axis of rotation. In certain implementations, the mounting bracket 210 and indexing terminal 110 rotate in unison with the payout spool 230. In other implementations, the payout spool 230 rotates relative to the mounting bracket 210.

In certain implementations, the mounting and payout arrangement 200 also includes a slack storage spool 220. The slack storage spool 220 remains coupled to the mounting bracket 210 after the payout spool 230 has been removed. The slack storage spool 220 accommodates any excess length of the distribution cable 150 after the indexing terminal 110 is secured to the mounting structure 108. Accordingly, mounting and payout arrangement 200 may be deployed with standardized cable lengths (e.g., 25 feet, 50 feet, 100 feet, 1,000 feet, 2,000 feet, 3,000 feet, etc.). In some implementations, a first portion of the distribution cable 150 nearer the indexing terminal 110 is wound around the slack storage spool 220 and the remainder of the distribution cable 150 is wound around the payout spool 230. In certain implementations, the slack storage spool 220 has a smaller cross-dimension (e.g., diameter) than the payout spool 230.

FIGS. 6 and 7 illustrate the example mounting bracket 210 securing the indexing terminal 110 to an example telephone pole 108 after the payout spool 230 has been removed. The indexing terminal 110 is held to the mounting bracket 210 by fastening arrangement 212. The mounting bracket 210 is coupled to the slack storage spool 220, which is disposed against the pole 108. In the example shown, the bracket 210 is mounted to the pole 108 using straps 218 that wrap around the pole 108 and couple to hooks 216. In other implementations, the bracket 210 may be otherwise coupled to the pole 108. In the example shown in FIG. 7, a multi-service terminal 130 has been mounted to the bracket 210 using fastening arrangement 214. A stub cable 135 of the multi-service terminal 130 is plugged into the first port 112 of the indexing terminal 110. Ruggedized ports 138 of the multi-service terminal 130 are configured to receive drop cables 160 as needed to add subscribers 109 to the network 100.

The distributed optical fiber network 100 is initially deployed by plugging the connectorized end 156 of a first distribution cable 150A into a termination field at a fiber distribution hub 105 or otherwise coupling the connectorized end 156 to one or more fibers of the feeder cable 140. In certain implementations, the first distribution cable 150A extends from an indexing terminal 110 mounted to a mounting and payout arrangement 200. The distribution cable 150A is paid out from a payout spool 230 of the mounting and payout arrangement 200 as the mounting and payout arrangement 200 is moved from the distribution hub 105 to a first pole 108A. For example, the payout spool 230 may be rotatably mounted to a shaft on a vehicle so that the payout spool 230 unwinds as the vehicle moves. In an alternative implementation, the mounting and payout arrangement 200 is secured to a mounting location and the distribution cable 150 is paid out and routed to the hub 105. In certain implementations, the distribution cable 150A is lashed to a strand between adjacent mounting structures 108 as the cable 150A is paid out.

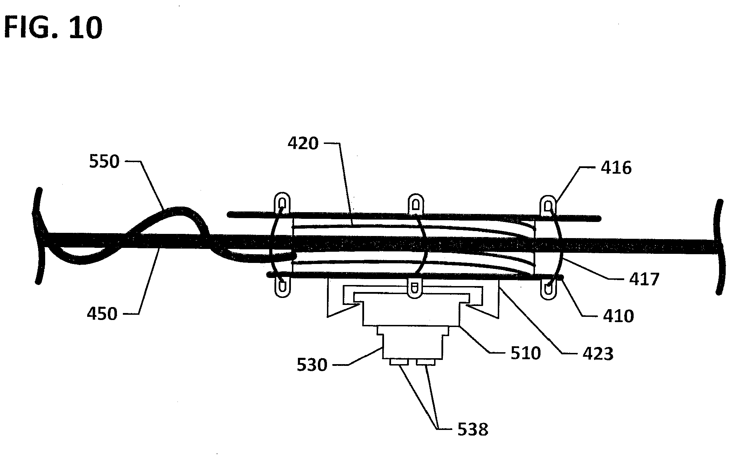

During payout, the distribution cable 150A also may be unwound from the slack storage spool 220 to the extent necessary as the mounting and payout arrangement 200 is routed to the first pole 108A. The payout spool 230 is removed when the distribution cable 150 has been unwound from the payout spool 230. At the mounting structure 108, the mounting bracket 210 is mounted to the first mounting structure 108A (FIG. 1). In some implementations, the mounting bracket 210 is mounted to the first pole 108A while the indexing terminal 110 is held by the mounting bracket 210. In other implementations, the indexing terminal 110 is secured to the mounting bracket 210 after the mounting bracket 210 is mounted to the first pole 108A. In certain implementations, the mounting bracket 210 is lashed to a strand between adjacent mounting structures 108 (e.g., see FIG. 10).

The connectorized end 156 of a second distribution cable 150B is plugged into the second port 114 of the indexing terminal 110. The second distribution cable 150B extends from an indexing terminal 110 mounted to a second mounting and payout arrangement 200. The distribution cable 150B is paid out from a payout spool 230 of the second mounting and payout arrangement 200 as the mounting and payout arrangement 200 is routed from the first pole 108A to the second pole 108B. The payout spool 230 is removed when the distribution cable 150 has been unwound from the payout spool 230. The second distribution cable 150B also is unwound from the slack storage spool 220 as necessary as the second mounting and payout arrangement 200 is routed to the second pole 108B. The mounting bracket 210 of the second mounting and payout arrangement 200 is mounted to the second pole 108B. Additional indexing terminals 110 are likewise mounted to additional poles (e.g., poles 108B-108H) in the same way.

When a subscriber 109 is to be added to the network 100, a multi-service terminal 130 may be mounted to the pole 108A-108H that is located closest to the subscriber 109 or otherwise corresponds to the subscriber 109. In certain implementations, the multi-service terminal 130 is mounted to the mounting bracket 210 (e.g., via fastening arrangement 214). Mounting both the indexing terminal 110 and the multi-service terminal 130 to the same bracket 210 may reduce the footprint taken up by the mounting and payout arrangement 200. Mounting both the indexing terminal 110 and the multi-service terminal 130 to the same bracket 210 also may reduce the cost of deploying the multi-service terminal (e.g., by facilitating installation at the pole 108). A connectorized end of a stub cable 135 of the multi-service terminal 130 is plugged into the first port 112 of the indexing terminal 110, thereby providing optical signals from the first port 112 to the distribution ports 138 of the multi-service terminal 130. A drop cable 160 may be routed between the subscriber 109 and one of the distribution ports 138.

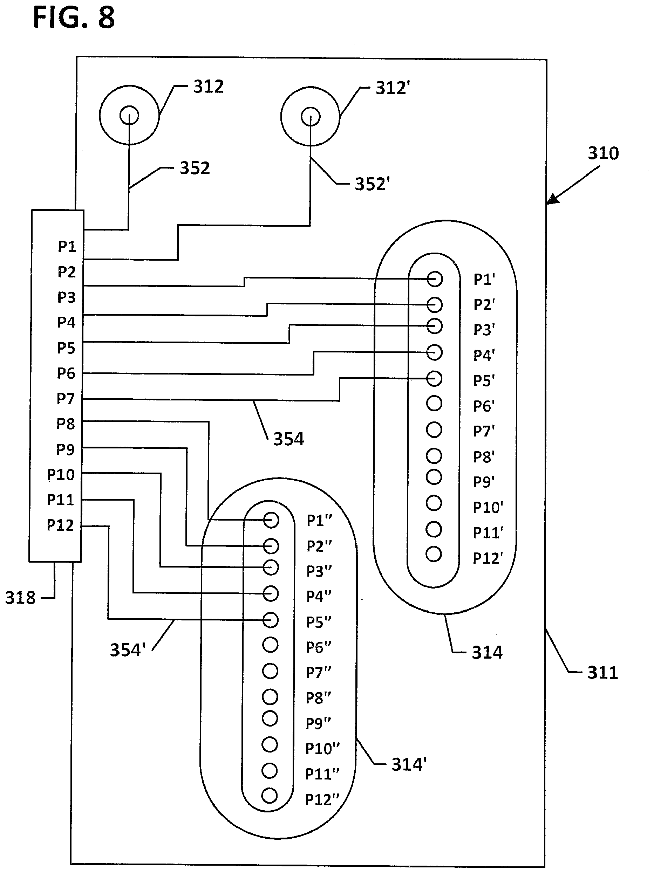

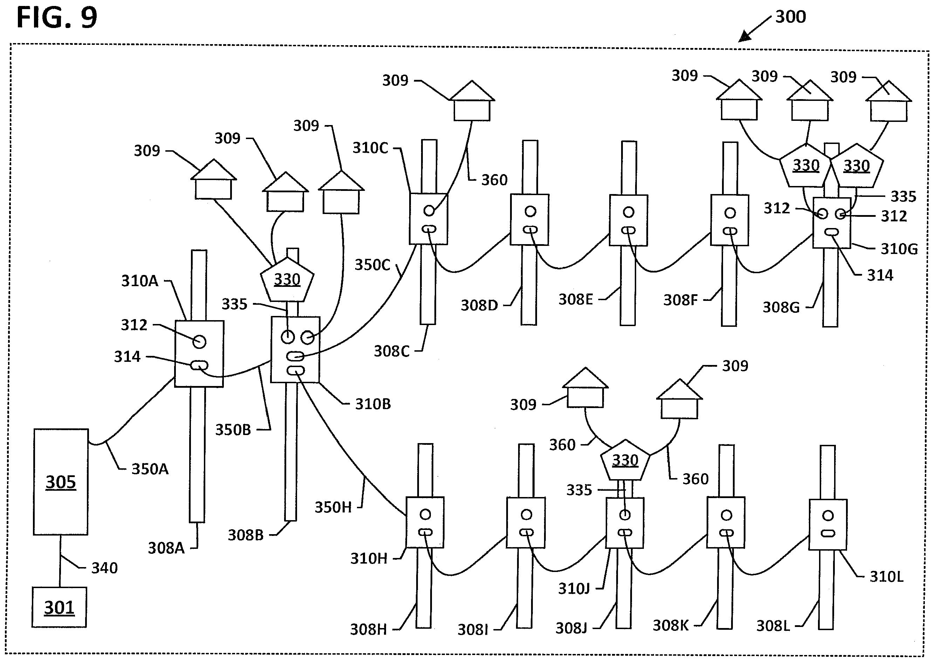

FIG. 8 illustrates another example indexing terminal 310 suitable for use in a distributed optical network 300 of FIG. 9. The indexing terminal 310 includes a housing 311 that defines at least a first single-fiber port 312 and at least a first multi-fiber port 314. In the example shown, the housing 311 defines a first single-fiber port 312, a second single-fiber port 312', a first multi-fiber port 314, and a second multi-fiber port 314'. In other implementations, however, the housing 311 may include a greater number of single-fiber ports and/or multi-fiber ports. In the example shown, the indexing terminal housing 311 also defines an input port 318 (e.g., ruggedized adapter, ruggedized connector, non-ruggedized optical adapter, non-ruggedized optical connector, etc.) configured to receive a multi-fiber distribution cable. In other implementations, however, a stub distribution cable may extend outwardly from the indexing terminal housing 311 as discussed above with respect to the indexing terminal 110 of FIG. 2.

The indexing terminal 310 includes internal cabling between the input port 318 and the other ports 312, 314. The input port 318 arranges optical fibers of the internal cabling into indexed positions. In the example shown, the input port 318 arranges twelve optical fibers into twelve indexed positions P1-P12. In general, each of the single-fiber ports 312 receives one of the optical fibers of the internal cabling for distribution to subscribers 109. In certain implementations, each of the single-fiber ports 312 receives the optical fiber from the next available indexed position of the input port 318. For example, a first optical fiber 352 of the internal cabling extends from the first indexed position P1 at the input port 318 to the first single-fiber port 312 and a second optical fiber 352' extends from the second indexed position P2 at the input port 318 to the second single-fiber port 312'.

The remaining optical fibers of the internal cabling are routed to one or more multi-fiber ports 314 for distribution to additional indexing terminals. In the example shown, the optical fibers 354 extending from the third through seventh indexed positions P3-P7 are routed to the first multi-fiber port 314 and the optical fibers 354' extending from the eight through the twelfth indexed positions P8-P12 are routed to the second multi-fiber port 314'. Each of the multi-fiber ports 314, 314' is configured to receive an optical connector having the same number of optical fibers as the input port 318 and, hence, the same number of indexed positions. In the example shown, the first multi-fiber port 314 has twelve indexed positions P1'-P12' and the second multi-fiber port 314' has twelve indexed positions P1"-P12". In other implementations, the multi-fiber ports 314, 314' and input port 318 may have a greater or lesser number of indexed positions. The optical fibers 354, 354' are indexed at the multi-fiber ports 314, 314' in sequence beginning with the first indexed position P1', P1", respectively. At least one of the indexed positions at each multi-fiber port 314, 314' does not receive an optical fiber 354, 354'. In the example shown, multiple indexed positions at each multi-fiber port 314, 314' do not receive optical fibers 354, 354'.

Such a cabling configuration enables the optical network to branch at one of the indexing terminals 310. For example, FIG. 9 illustrates another example optical network 300 that includes a central office 301, at least one fiber distribution hub 305, and a plurality of indexing terminals. Any of the indexing terminals described herein may be utilized in the optical network 300. For example, a first indexing terminal 310A mounted to a first mounting location 308A in FIG. 9 has the same structural configuration as described above with respect to the indexing terminal 110 of FIG. 2. The first indexing terminal 310A has one single-fiber port 312 and one multi-fiber port 314. A stub cable 350A optically couples the first indexing terminal 310A to the distribution hub 305.

A second indexing terminal 310B is mounted to a mounting structure 308B in FIG. 9. A second distribution cable 350B optically couples the second indexing terminal 310B to the first indexing terminal 310A. The second indexing terminal 310B has two single-fiber ports and two multi-fiber ports (e.g., see indexing terminal 310 of FIG. 8). As shown in FIG. 9, a third distribution cable 350C may optically couple a third indexing terminal 310C to the first multi-fiber port 314 and another distribution cable 350H may optically couple an eighth indexing terminal 310H to the second multi-fiber port 314 of the second indexing terminal 310B. Only the first five optical fibers of each distribution cable 350C, 350H carry optical signals. Accordingly, no more than four indexing terminals may be daisy-chained to each of the third and eight indexing terminals 310C, 310H. Such a branching of optical signals may be advantageous to enable routing of the optical network 300 down adjacent streets.

One or more multi-service terminals 330 may be optically coupled to the indexing terminals 310. For ease in viewing, only four multi-service terminals 330 are shown in FIG. 9. However, it will be understood that each indexing terminal 310 may be coupled to one or more multi-service terminals. In the example shown, one multi-service terminal 330 is shown optically coupled to the first single-fiber port 312 of the second indexing terminal 310B, two multi-service terminals 330 are shown optically coupled to the first and second single-fiber ports 312 of the seventh indexing terminal 310G, and one multi-service terminal 330 is shown optically coupled to the tenth indexing terminal 310J. In some implementations, one or more of the subscribers may be coupled directly to one of the single-fiber ports 312 of the indexing terminals 310 (e.g., see the second single-fiber port 312 of the second indexing terminal 310B).

FIG. 10 illustrates another example indexing terminal 510 mounted to another example mounting bracket 410. The mounting bracket 410 is coupled to a slack storage spool 420. In certain implementations, a removable payout spool may be coupled to the mounting bracket 410 and/or stack storage spool 420 prior to deployment. Hooks 416 are coupled to the mounting bracket 410 to facilitate lashing the mounting bracket 410 to a strand 450 extending between mounting structures (e.g., telephone poles). For example, straps, cable ties, or other fastening structures 417 may couple to the hooks 416 and extend around the strand 450. The distribution cable 550 also may be lashed to the strand 450 as the distribution cable 550 extends between the indexing terminal 510 and a previous indexing terminal or distribution hub. In other implementations, the mounting bracket may be secured to the mounting structure itself (e.g., as shown in FIG. 7).

FIG. 10 also illustrates another example multi-service terminal 530 that mounts to the indexing terminal 510. In certain implementations, the multi-service terminal 530 mounts to a housing of the indexing terminal 510 instead of directly to the bracket 410. For example, the multi-service terminal 530 may define a port interface (e.g., a male connector or a female adapter) configured to mate with the port interface (e.g., a corresponding male connector or a corresponding female adapter) of one or more single-fiber ports of the indexing terminal 510. In certain implementations, the port interfaces are ruggedized. In the example shown, the multi-service terminal 530 mounts (e.g., snaps fits, nests, etc.) to a front of the indexing terminal 510 so that the drop ports 538 of the multi-service terminal 530 are freely accessible.

The above specification, examples and data provide a complete description of the manufacture and use of the composition of the invention. Since many embodiments of the invention can be made without departing from the spirit and scope of the invention, the invention resides in the claims hereinafter appended.

## Claims

1. An indexing terminal (110) comprising:
a housing (111) defining an interior;
a plurality of optical fiber disposed at least partially within the interior of the housing (111), the optical fibers extending from first ends to second ends;
an input port (156) terminating the first ends of the optical fibers, the input port (156) indexing the first ends of the optical fibers (154) into positions P1 through Pn, wherein the input port (156) is spaced from the housing (111);
a first single-fiber port (112) accessible from an exterior of the housing (111), the first single-fiber port (112) receiving the second end of a first (152) of the optical fibers; and
a first multi-fiber port (114) accessible from an exterior of the housing (111), the first multi-fiber port (114) receiving the second ends of some optical fibers (154), the first multi-fiber port (114) indexing the second ends of the some optical fibers (154) into positions P1' through Pn' that have a one-to-one correspondence with positions P1 through Pn ;
wherein the first end of the first optical fiber (152) is indexed at position Px, wherein Px is one of the positions P1 through Pn, wherein the first multi-fiber port (112) has a corresponding position Px' that is one of the positions P1' through Pn', and wherein the second end of one of the some optical fibers (154) is routed to Px'.

2. The indexing terminal of claim 1, wherein the optical fibers form a stub cable (150) routed out of the interior of the housing (111).

3. The indexing terminal of any of claims 1-2, wherein the input port (156), the first single-fiber port (112), and the first multi-fiber port (114) are ruggedized.

4. The indexing terminal of claim 1, wherein the position Px is the position P1.

5. The indexing terminal of claim 1, wherein the plurality of optical fibers includes twelve optical fibers.

6. The indexing terminal of claim 1, wherein the plurality of optical fibers includes twenty-four optical fibers.

7. The indexing terminal of claim 1, wherein at least one of the first single-fiber port (112) and the first multi-fiber port (114) is disposed on the housing (111).

8. The indexing terminal of claim 1, wherein at least one of the fiber positions P1'-P12' does not receive an optical fiber (154).

9. The indexing terminal of claim 1, wherein the input port (156) includes a multi-fiber connector.

10. The indexing terminal of claim 1, wherein the second port (114) defines a female port at which an optical fiber plug may be mated to a first optical fiber (152).

11. The indexing terminal of claim 1, wherein when a plurality of indexing terminals (110) are daisy-chained together, the optical fiber (152) diverted to the first port (112) of each indexing terminal (110) will be pulled from the same position P1-P12.

12. The indexing terminal of claim 1, wherein the separated optical fiber (152) is located at an end of the row/strip of the optical fibers.

13. The indexing terminal of claim 1, wherein a fiber (154) having a first end at position Pn of the input port (156) would have a second end at position P(n-1)' at the first multi-fiber port (114).

14. The indexing terminal of claim 1, wherein a stub distribution cable (150B) of a second indexing terminal (110) mounted to a second pole (108B) may be routed to and plugged into the second port (114) of the first indexing terminal (110) mounted to a first pole (108A).

15. A mounting and payout arrangement (200) comprising
a payout spool (230) from which a distribution cable (150) of the indexing terminal (110) as claimed in claim 1 may be paid out, a stub distribution cable (150) of the indexing terminal (110) being initially wound around the payout spool (230), the payout spool (230) being removable from a mounting bracket (210) when the distribution cable (150) has been unwound from the payout spool (230), the mounting bracket (210) being configured to secure at least the indexing terminal 110 to a telephone pole 108 or other mounting structure.
